# EUROPEAN PATENT SPECIFICATION

(11) **EP 0 991 547 B1**
(45) Date of publication and mention of the grant of the patent: **05.03.2003**
(21) Application number: 99916078.1
(22) Date of filing: 22.04.1999
(51) Int. Cl.: B60R 9/06, B60R 9/10

(54) **CARRYING CONSTRUCTION TO BE MOUNTED ON THE BACK OF A VEHICLE**
TRÄGERKONSTRUKTION AN DEM HECK EINES KRAFTFAHRZEUGES
STRUCTURE DE TRANSPORT A MONTER A L'ARRIERE D'UN VEHICULE

(30) Priority: 22.04.1998 NL 1008962
(43) Date of publication of application: 12.04.2000
(73) Proprietor: Multa Bedrijven, 9403 AJ Assen (NL)
(72) Inventor: KEMPEN, Lambertus, NL-9403 AJ Assen (NL)
(74) Representative: Ottevangers, Sietse Ulbe
(86) International application number: NL9900230
(87) International publication number: WO99054169

(56) References cited:
- WO-A-90/12704
- DE-U- 9 311 905
- DE-U- 9 413 008
- FR-A- 2 688 178
- NL-A- 8 100 211

## Description

The present invention relates to a carrying construction to be mounted on the back of a vehicle with a supporting member and carriers which, relative to the supporting member, can be swung upwards into the rest position and downwards into the working position, which supporting member can be placed on a ball head of a towbar behind the vehicle and can be fixed thereon.

In such known carrying constructions (see for instance NL 8 100 211 A or DE 9 311 905 U) the supporting member is fixed on the ball head by using individual auxiliaries which, moreover, often require specific tools.

The object of the invention is to simplify the carrying construction in this respect and to make the use of such auxiliaries and tools superfluous.

According to the invention the carrying construction as defined in the opening paragraph is characterized in that the fixing of the supporting member on the ball head is done with the aid of clamping means forming part of the carrying construction, of which the clamping action, after the supporting member has been placed on the ball head, is realized by swinging the carriers downwards.

Further according to the invention the clamping means are provided with a tilting element, which is rotatably arranged in the supporting member, and with pressure elements, preferably made of plastic, arranged on the carriers, which pressure elements, when the carriers are swung downwards, press the tilting element against the ball head, on which ball head a counterpressure is exerted by a fixedly arranged counterpressure surface forming part of the supporting member. In particular the tilting element has a folded lip, and when the supporting member is placed on the ball head, the tilting element is rotated under the action of the pressure exerted by the ball head on the folded lip, such that the pressure elements clamp the tilting element against the ball head when the carriers are swung downwards. In order to intensify this clamping action, the tilting element is provided with a spring, in particular a disk spring which, when the supporting member is placed on the ball, is pressed against the ball.

In order that play in the hinge construction of the carriers relative to the supporting member and thus variations in the intensity of the clamping action of the supporting member on a ball head may be taken up as much as possible, the supporting member is provided according to the invention with supporting elements which realize that in the working position the pressure elements exert a nearly constant pressure on the tilting element.

In order to prevent the possibility of a carrying construction clamped around the ball head being wrenched around the ball head after all, the tilting element can be provided with a first engagement element for the neck of the ball head, while, furthermore, the counterpressure surface can be provided with a second engagement element for the neck of the ball head. Also, the carriers can be provided with engagement elements which, when the supporting member is placed on the ball head and the carriers are swung downwards, engage under the ball head on the neck thereof. A special favorable embodiment is obtained when all these engagement elements are present; for then the neck of the ball head is engaged from four sides, so that wrenching the carrying construction clamped around the ball head becomes impossible in principle.

Although the dimensions of a ball head of a towbar are fully standardized, this does not apply to the neck of the ball head. In practice, with different types variations are found with respect to the dimensions of the cross-section of the ball head. The carrying construction, however, should be suitable for all these types. Hence the above engagement elements are adjustable to the dimensions of the neck of the ball head. To this end, the engagement elements are preferably designed as setscrews.

It is further observed that the carrying construction may be provided with a locking bar for fixing the carriers in the working position. A lock may further be arranged to prevent the possibility of removing the carrying construction from the ball head by swinging the carriers upwards. This lock preferably acts on the locking bar.

The invention will now be further explained with reference to the accompanying drawings in which:
Fig. 1 is a perspective view of the carrying construction according to the invention;
Fig. 2 is a bottom view of a part of this carrying construction in the swung-up position;
Fig. 3 is a bottom view of a part of this carrying construction in the swung-out position; and
Fig. 4 is a diagrammatic view of a part of the supporting member after being clamped around a ball head.

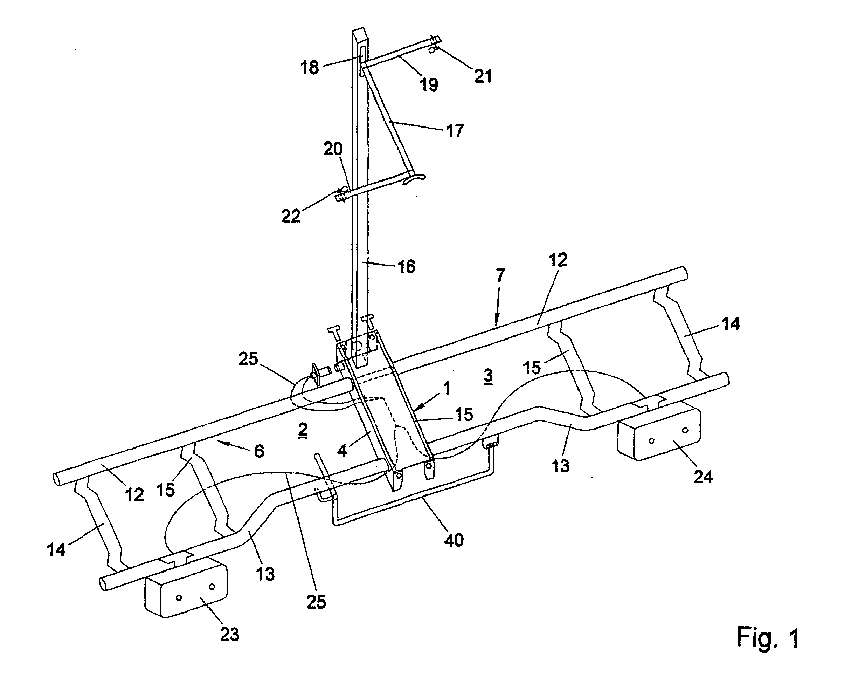

The carrying construction shown in the figures, in full or in part, comprises a supporting member 1 and carriers 2 and 3 which, relative to the supporting member, can be swung up into the rest position and down into the working position. The carriers 2 and 3 are each built up from a hinge plate 4 and 5, respectively, and a carrying frame 6 and 7, respectively, rigidly connected thereto. The hinge plates 4 and 5 are hingedly connected to the supporting member 1 around the axes 8 and 9. For this purpose, the hinge plates 4 and 5 are provided at both ends with lips 10, through which lips hinge screws 11 are passed and fixed on the supporting member 1. The carrying frames 6 and 7 are each so designed through two tubes 12 and 13 and two interposed connecting strips 14 and 15 that, when the carrying construction is fixed on the ball head of a towbar behind a vehicle, one or more bicycles can receive support therefrom. The carrying construction shown in Fig. 1 is suitable for two bicycles.

Arranged on the supporting member 1 is an upright 16. Near the top thereof a cross-bar 17 is movable up and down in a slot 18 and can be fixed on the upright 16 at a desired level through, for instance, a wing nut. Near the two ends the cross-bar 17 has a fastening bar 19 and 20, respectively. Situated near the ends of these fastening bars are fastening means 21 and 22, respectively. With the aid of each of these fastening means a respective bicycle receiving support from the carrying frames 6 and 7 can be fixed.

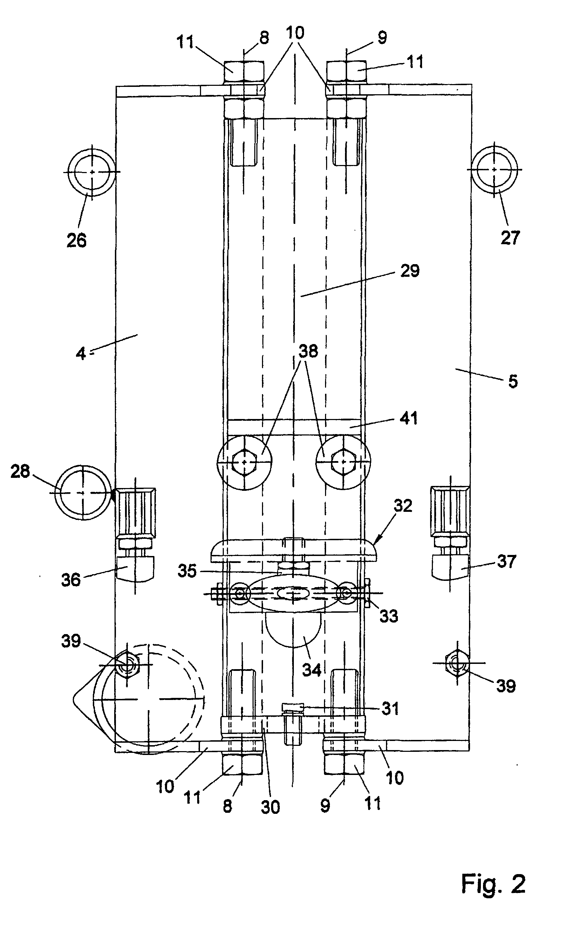

In Fig. 1 the carrying frames 6 and 7 are further provided with lighting elements 23 and 24 with an associated cabling 25 with a connection to the supporting member 1. For this cabling a number of eyes 26, 27 and 28 serving to pass the cables are arranged on the hinge plates 4 and 5, as shown in Fig. 2.

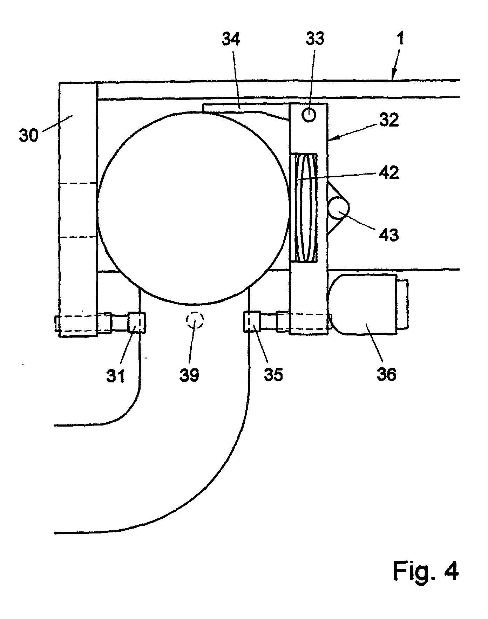

The supporting member 1 is provided with an upper plate 29, on which the upright 16 is arranged, while on one of the short sides of the supporting member, namely on the side where the supporting member can be placed around the ball head, a fixedly arranged plate part 30 is present, which plate part functions as counterpressure surface when clamping the supporting member around the ball head by rotating the tilting element. The counterpressure surface 30 has a round opening or optionally only a round recess against which the ball head can be clamped. The counterpressure surface 30 is further provided with an engagement element 31 in the form of a setscrew with a concave end part which is arranged such that the concave end part can engage around a corresponding part of the neck of a ball head, as shown in Fig. 4.

The supporting member 1 is further provided with a tilting element 32, which, by means of a hinge screw 33, is rotatable between two supports arranged on the long sides of the supporting member 1 (not shown). The tilting element 32 has a folded lip 34, with the aid of which, when the supporting member is placed on a ball head, the tilting element is rotated such that it can be pressed against the ball head by pressure elements to be further described below. The ball head is then clamped between the tilting element 32 and the counterpressure surface 30. As shown in Fig. 4, a disk spring 42 is arranged in a round recess of the tilting element 32. The clamping action obtained by the cooperation of the tilting element 32 and the counterpressure surface 30 is thereby intensified. In order to take up the effects of providing a recess in the tilting element on the strength of the tilting element, the tilting element is provided on the back with a strengthening rib 43. The tilting element 32 is further provided with an engagement element 35 in the form of a setscrew with a concave end part which is arranged such that the concave end part can engage around a corresponding part of the neck of a ball head, as shown in Fig. 4.

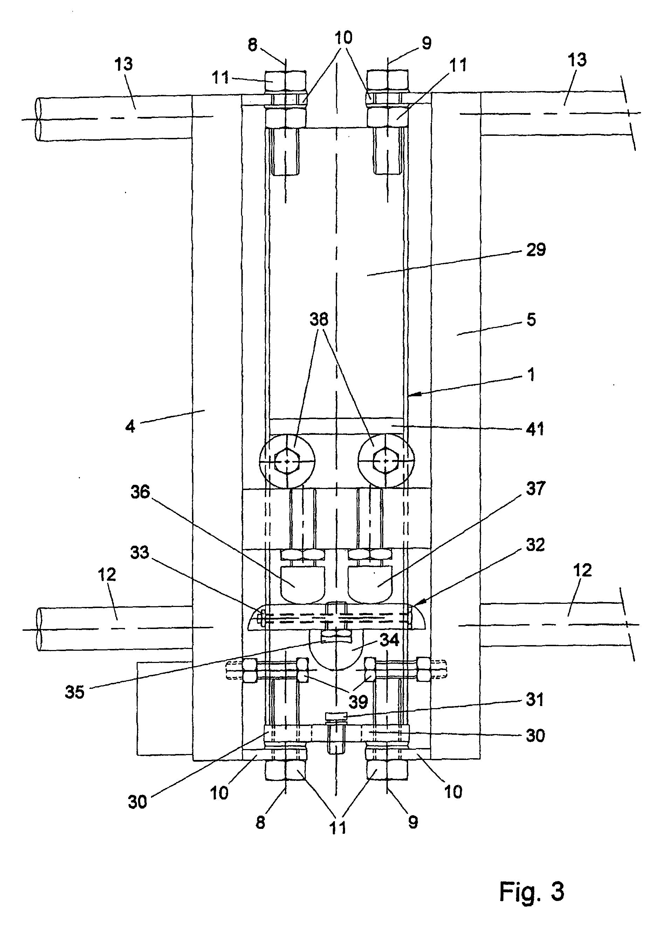

Arranged on the hinge plates 4 and 5 are pressure elements 36 and 37, respectively, preferably made of plastic. When the carriers are swung out, the hinge plates 4 and 5 being brought into the vertical position shown in Fig. 3, the pressure elements 36 and 37 contact the back of the tilting element 32 and exert a pressure thereon so that, when the carrying construction is placed on the ball head, the supporting member 1 is clamped on this ball head; this position is further shown in Fig. 4. The tilting element 32 together with the pressure elements 36 and 37 and the counterpressure surface 30 forms clamping means for the ball head. Because, as a result of play in the setscrews 11, the pressure elements 36, 37, in the working position, will not always press against the tilting element 32 with the desired pressure, supporting elements in the form of two round blocks 38 are arranged on the supporting member 1. In the working position these blocks enable an accurate positioning of the pressure elements 36, 37 relative to the tilting element 32 so that a desired constant exertion of pressure by the pressure elements 36, 37 on the tilting element can be realized. Arranged behind the blocks 38, approximately halfway down the length of the supporting member 1, is a strengthening plate 41.

The above clamping means further comprise, in addition to the tilting element 32 with the pressure elements 36, 37 and the counterpressure surface 30, a number of engagement elements, of which the engagement elements 31 and 35 have already been mentioned above. In addition to these engagement elements already mentioned, engagement elements 39 are arranged on the hinge plates 4, 5 of the respective carriers 2, 3. When the supporting member is placed on the ball head and the carriers are swung downwards, these engagement elements engage under the ball head on the neck thereof. The engagement elements 39 are designed as setscrews too. The adjustability of the engagement elements 31, 35 and 39 is important to make the carrying construction suitable for being placed on the ball heads, the neck diameter of which may yet sometimes differ in practice, in spite of the fact that in the matter of dimensions the ball head itself is meanwhile fully standardized.

It is further observed that in order to prevent the carriers 2 and 3 from tending during driving the vehicle to return to the swung-in position again owing to shocks or other causes, a lock is present in the form of a locking bar 40, which is hingedly connected to the carrying frame 7 and can engage the carrying frame 6. This engagement means may be provided with a lock so that unauthorized persons cannot swing the carriers upwards in order to remove the carrying construction from the ball head. Arranged on this locking bar may be, for instance, a license plate.

The operation of the carrying construction is as follows. The engagement elements 31, 35 and 39 are adjusted once to the neck of the ball head present on the drawhook of the vehicle. Subsequently, the carrying construction is placed with the supporting member 1 over the ball head and clamped thereon by moving the carriers 2 and 3 downwards. Then the locking bar 40 is fixed between the two carriers and the carrying construction is ready for use after connecting the cabling and two bicycles can be placed thereon and fixed by means of fastening means 21.

The invention is not limited to the embodiment described herein but comprises all kinds of modifications, of course as far as they fall within the scope of protection of the annexed claims. Thus it is possible to design the carrying construction so as to be suitable for transport of other objects and luggage than only bicycles. In the matter of design the carrying construction is not limited to two bicycles either; a narrower carrying construction for only one bicycle is possible; also, a broader embodiment for, for instance, three bicycles is possible.

## Claims

1. A carrying construction to be mounted on the back of a vehicle with a supporting member (1) and carriers (2, 3) which, relative to the supporting member, can be swung upwards into the rest position and downwards into the working position, which supporting member (1) can be placed on a ball head of a towbar behind the vehicle and can be fixed thereon, **characterized in that** this fixing is done with the aid of clamping means (30, 32) forming part of the carrying construction, of which the clamping action, after the supporting member (1) has been placed on the ball head, is realized by swinging the carriers (2, 3) downwards.

2. A carrying construction according to claim 1, **characterized in that** the clamping means (30, 32) are provided with a tilting element (32), which is movably arranged in the supporting member (1), and with pressure elements (36, 37) arranged on the carriers (2, 3), which pressure elements, when the carriers are swung downwards, press the tilting element (32) against the ball head, on which ball head a counterpressure is exerted by a fixedly arranged counterpressure surface (30) forming part of the supporting member (1).

3. A carrying construction according to claim 2, **characterized in that** the tilting element (32) has a folded lip (34) and when the supporting member is placed on the ball head, the tilting element is rotated under the action of the pressure exerted by the ball head on the folded lip, such that the pressure elements (36, 37) clamp the tilting element (32) against the ball head when the carriers (2, 3) are swung downwards.

4. A carrying construction according to claim 3, **characterized in that** the tilting element (32) is provided with a spring (42) which, when the supporting member is placed on the ball, is pressed against the ball.

5. A carrying construction according to any one of claims 2-4, **characterized in that** the supporting member (1) is provided with supporting elements (38) to realize that in the working position the pressure elements (36, 37) exert a nearly constant pressure on the tilting element.

6. A carrying construction according to any one of claims 2-5, **characterized in that** the pressure elements (36, 37) are made of plastic.

7. A carrying construction according to any one of claims 2-6, **characterized in that** the tilting element (32) is provided with a first engagement element (35) for the neck of the ball head.

8. A carrying construction according to any one of claims 2-7, **characterized in that** the counterpressure surface (30) is provided with a second engagement element (31) for the neck of the ball head.

9. A carrying construction according to any one of the preceding claims, **characterized in that** the carriers (2, 3) are provided with further engagement elements (39) which, when the supporting member has been placed on the ball head and the carriers are swung downwards, engage under the ball head on the neck thereof.

10. A carrying construction according to any one of claims 7-9, **characterized in that** engagement elements (31, 35, 39) are adjustable to the dimensions of the neck of the ball head.

11. A carrying construction according to any one of the preceding claims, **characterized in that** a locking bar (40) is present to fix the carriers (2, 3) in the working position.

12. A carrying construction according to any one of the preceding claims, **characterized in that** a lock is present to prevent the possibility of wrenching the carrying construction from the ball head by swinging the carriers upwards.

## Patentansprüche

1. Tragkonstruktion zur Montage am Heck eines Fahrzeugs, mit einem Halteelement (1) und Trägern (2,3), die relativ zu dem Halteelement aufwärts in die Ruheposition und abwärts in die Arbeitsposition schwenkbar sind, wobei das Halteelement (1) auf einen Kugelkopf einer Zugstange am hinteren Teil des Fahrzeugs platziert und an diesem befestigt werden kann,
**dadurch gekennzeichnet, dass**
dieses Befestigen mit Hilfe von Teil der Tragkonstruktion bildenden Klemmeinrichtungen (30,32) erfolgt, deren Klemmwirkung nach dem Platzieren des Halteelements (1) auf dem Kugelkopf durch Schwenken der Träger (2,3) in Abwärtsrichtung wirksam wird.

2. Tragkonstruktion nach Anspruch 1, **dadurch gekennzeichnet, dass** die Klemmeinrichtungen (30,32) mit einem Kippelement (32) versehen sind, das bewegbar in dem Halteelement (1) angeordnet ist, und mit Druckelementen (36,37) versehen sind, die auf den Trägern (2,3) angeordnet sind und die bei abwärts geschwenkten Trägern das Kippelement (32) gegen den Kugelkopf drücken, wobei von einer Teil des Halteelements (1) bildenden feststehenden Gegendruckfläche (30) ein Gegendruck auf den Kugelkopf ausgeübt wird.

3. Tragkonstruktion nach Anspruch 2, **dadurch gekennzeichnet, dass** das Kippelement (32) eine abgekantete Lippe (34) aufweist, und dass, wenn das Halteelement auf dem Kugelkopf platziert ist, das Kippelement aufgrund des von dem Kugelkopf auf die abgekantete Lippe ausgeübten Drucks gedreht wird, so dass die Druckelemente (36,37) das Klemmelement (32) an den Kugelkopf klemmen, wenn die Träger (2,3) in Abwärtsrichtung geschwenkt sind.

4. Tragkonstruktion nach Anspruch 3, **dadurch gekennzeichnet, dass** das Kippelement (32) mit einer Feder (42) versehen ist, die, wenn das Halteelement auf der Kugel platziert ist, gegen die Kugel gedrückt wird.

5. Tragkonstruktion nach einem der Ansprüche 2-4, **dadurch gekennzeichnet, dass** das Halteelement (1) mit Halteelementteilen (38) versehen ist, damit in der Arbeitsposition die Druckelemente (36,37) einen nahezu konstanten Druck auf das Kippelement ausüben.

6. Tragkonstruktion nach einem der Ansprüche 2-5, **dadurch gekennzeichnet, dass** die Druckelemente (36,37) aus Kunststoff gefertigt sind.

7. Tragkonstruktion nach einem der Ansprüche 2-6, **dadurch gekennzeichnet, dass** das Kippelement (32) mit einem ersten Angreifelement (35) für den Hals des Kugelkopfs versehen ist.

8. Tragkonstruktion nach einem der Ansprüche 2-7, **dadurch gekennzeichnet, dass** die Gegendruckfläche (30) mit einem zweiten Angreifelement (31) für den Hals des Kugelkopfs versehen ist.

9. Tragkonstruktion nach einem der vorhergehenden Ansprüche, **dadurch gekennzeichnet, dass** die Träger (2,3) mit weiteren Angreifelementen (39) versehen sind, die, wenn das Halteelement auf dem Kugelkopf platziert ist und die Träger in Abwärtsrichtung geschwenkt sind, unter dem Kugelkopf an dem Hals des Kugelkopfs angreifen.

10. Tragkonstruktion nach einem der Ansprüche 7-9, **dadurch gekennzeichnet, dass** die Angreifelemente (31,35,39) auf die Abmessungen des Halses des Kugelkopfs einstellbar sind.

11. Tragkonstruktion nach einem der vorhergehenden Ansprüche, **dadurch gekennzeichnet, dass** eine Arretierstange (40) zum Fixieren der Träger (2,3) in der Arbeitsposition vorgesehen ist.

12. Tragkonstruktion nach einem der vorhergehenden Ansprüche, **dadurch gekennzeichnet, dass** eine Arretierung vorgesehen ist, die verhindert, dass beim Schwenken der Träger in Aufwärtsrichtung die Tragkonstruktion von dem Kugelkopf gerissen wird.

## Revendications

1. Construction de transport destinée à être montée à l'arrière d'un véhicule avec un organe de support (1) et des organes de transport (2, 3) qui, par rapport à l'organe de support, peuvent pivoter vers le haut vers la position de repos et vers le bas vers la position de travail, l'organe de support (1) pouvant être placé sur une tête à rotule d'une barre de traction derrière le véhicule et pouvant être fixé à celle-ci, **caractérisée en ce que** cette fixation est réalisée à l'aide d'un dispositif de serrage (30, 32) faisant partie de la construction de transport et dont l'action de serrage, après que l'organe de support (1) a été placé sur la tête à rotule, est réalisée par pivotement vers le bas des organes de transport (2, 3).

2. Construction de transport selon la revendication 1, **caractérisée en ce que** le dispositif de serrage (30, 32) comporte un élément de basculement (32) disposé afin qu'il soit mobile dans l'organe de support (1) et des éléments de pression (36, 37) placés sur les organes de transport (2, 3), les éléments de pression, lorsque les organes de transport ont pivoté vers le bas, repoussant l'élément basculant (32) contre la tête de rotule sur laquelle est exercée une contre-pression par une surface fixe (30) de contre-pression qui fait partie de l'organe de support (1).

3. Construction de transport selon la revendication 2, **caractérisée en ce que** l'élément basculant (32) a une lèvre pliée (34) et, lorsque l'organe de support est placé sur la tête à rotule, l'élément basculant tourne sous l'action, de la pression exercée par la tête à rotule sur la lèvre pliée, si bien que les éléments de pression (36, 37) serrent l'élément basculant (32) contre la tête à rotule lorsque les organes de transport (2, 3) pivotent vers le bas.

4. Construction de transport selon la revendication 3, **caractérisée en que** l'élément basculant (32) a un ressort (42) qui est repoussé contre la rotule lorsque l'élément de support est placé sur la rotule.

5. Construction de transport selon l'une quelconque des revendications 2 à 4, **caractérisée en ce que** l'organe de support (1) comporte des éléments de support (38) réalisés de manière que, en position de travail, les éléments de pression (36, 37) exercent une pression presque constante sur l'élément basculant.

6. Construction de transport selon l'une quelconque des revendications 2 à 5, **caractérisée en ce que** les éléments de pression (36, 37) sont formés de matière plastique.

7. Construction de transport selon l'une quelconque des revendications 2 à 6, **caractérisée en ce que** l'élément basculant (32) est muni d'un premier élément de coopération (35) avec le col de la tête de rotule.

8. Construction de transport selon l'une quelconque des revendications 2 à 7, **caractérisée en ce que** la surface de contre-pression (30) a un second élément de coopération (31) destiné au col de la tête à rotule.

9. Construction de transport selon l'une quelconque des revendications précédentes, **caractérisée en ce que** les organes de transport (2, 3) comportent d'autres éléments de coopération (39) qui, lorsque l'organe de support a été placé sur la tête à rotule et les organes de transport ont basculé vers le bas, sont en coopération avec le col de la tête à rotule sous celle-ci.

10. Construction de transport selon l'une quelconque des revendications 7 à 9, **caractérisée en ce que** les éléments de coopération (31, 35, 39) sont réglables en fonction des dimensions du col de la tête à rotule.

11. Construction de transport selon l'une quelconque des revendications précédentes, **caractérisée en ce qu'**une barre de blocage (40) est incorporée afin qu'elle fixe les organes de transport (2, 3) en position de travail.

12. Construction de transport selon l'une quelconque des revendications précédentes, **caractérisée en ce qu'**un verrou est destiné à empêcher la possibilité d'arrachement de la construction de transport de la tête à rotule par pivotement des organes de transport vers le haut.
